# FASCICULE DE BREVET EUROPEEN

(11) **EP 0 771 958 B1**
(45) Date de publication et mention de la délivrance du brevet: **29.01.2003**
(21) Numéro de dépôt: 96116427.4
(22) Date de dépôt: 14.10.1996
(51) Int. Cl.: F16C 25/04, B60S 1/34

(54) **Palier compressible axialement pour un mécanisme d'essuie-glace**
Axial-komprimierbares Lager für einen Scheibenwischermechanismus
Axially compressible bearing for a windscreen wiper mechanism

(30) Priorité: 30.10.1995 FR 9512789
(43) Date de publication de la demande: 07.05.1997
(73) Titulaire: VALEO SYSTEMES D'ESSUYAGE, 78321 La Verrière (FR)
(72) Inventeur: Morin, Pascal, 86100 Chatellerault (FR); Lisiecki, Bruno, 92320 Chatillon (FR)
(74) Mandataire: Kohn, Philippe

(56) Documents cités:
- EP-A- 0 603 840
- FR-A- 2 541 530
- US-A- 2 642 318
- US-A- 3 241 892
- US-A- 5 067 198
- US-A- 5 211 485
- US-A- 5 320 578

## Description

L'invention concerne un palier compressible axialement pour un mécanisme d'essuie-glace.

L'invention concerne plus particulièrement un palier pour la fixation et le guidage en rotation d'un arbre tournant, notamment pour un arbre d'entraînement en balayage alterné d'un essuie-glace de véhicule automobile, selon le préambule de la revendication 1, comme connu par US-A-3 241 892.

Un mécanisme d'entraînement en balayage alterné d'un essuie-glace de véhicule automobile comporte généralement un motoréducteur qui entraîne en rotation alternée, par l'intermédiaire d'une tringlerie de transmission, un ou deux arbres d'entraînement qui sont montés tournants par rapport à la carrosserie du véhicule grâce à des paliers.

Chaque arbre d'entraînement comporte une extrémité supérieure qui dépasse axialement du palier et qui débouche à l'extérieur du véhicule afin de recevoir une tête d'entraînement d'un essuie-glace tandis que l'extrémité inférieure de l'arbre tournant est reliée à la tringlerie de transmission du mouvement.

L'arbre d'entraînement est monté tournant par tout moyen adéquat, par exemple une douille de palier en bronze, et il est par ailleurs prévu des moyens de blocage axial de l'arbre d'entraînement par rapport au palier qui est fixé sur le véhicule.

Selon un mode de réalisation connu, l'extrémité supérieure de l'arbre d'entraînement comporte une gorge radiale dans laquelle est reçu un anneau élastique qui est destiné à venir en appui contre une extrémité axiale supérieure du palier.

Un élément de la tringlerie de transmission est généralement emmanché à force sur l'extrémité inférieure de l'arbre d'entraînement et prend appui contre l'extrémité inférieure du palier.

Afin de limiter les risques de jeu axial, une rondelle de compensation déformable est interposée entre les éléments de tringlerie solidaires de l'extrémité inférieure de l'arbre et l'extrémité inférieure du palier.

Toutefois, il est apparu qu'un tel type de montage présente l'inconvénient de nécessiter une pièce spécifique au rattrapage de jeu, en l'occurrence la rondelle de compensation, pièce qui se révèle par ailleurs sensible à l'usure et susceptible de diminuer la durée de vie de l'assemblage.

Par ailleurs, les rondelles de compensation déformables utilisées jusqu'à présent ne peuvent rattraper que de faibles jeux axiaux si bien que les tolérances dimensionnelles des pièces et les tolérances d'assemblage de ces pièces sont faibles, ce qui rend un tel assemblage coûteux.

C'est dans le but d'apporter une solution à ces problèmes que l'invention propose un palier du type vu précédemment qui est caractérisé par les caractéristiques de la deuxième partie de la revendication 1.

Selon d'autres caractéristiques de l'invention
- le tronçon compressible comporte une portion annulaire en matériau élastomère entourée d'une chemise cylindrique en matière plastique réalisée venue de matière avec le corps de palier ;
- la chemise cylindrique est déformée plastiquement radialement vers l'extérieur lors du serrage axial de l'arbre dans le palier tandis que la portion annulaire est comprimée élastiquement ;
- il est prévu des joints d'étanchéité entre l'arbre et le corps de palier qui sont agencés à chacune des extrémités axiales du corps de palier, et en ce qu'au moins un joint d'étanchéité est réalisé avec le même matériau et en même temps que la portion en matériau élastomère du tronçon compressible ;
- la périphérie interne de la portion annulaire en matériau élastomère est au contact de l'arbre lorsque celui-ci est serré axialement dans le palier afin de former un joint d'étanchéité entre l'arbre et le palier ;
- le tronçon compressible formant joint d'étanchéité est agencé à l'une des extrémités axiales du palier ;
- la portion en matériau élastomère et le corps du palier sont réalisés par moulage par infection simultanée de matière plastique et de matière élastomère.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues schématiques en coupe axiale partielle d'un mode de réalisation de l'assemblage d'un arbre d'entraînement sur un palier, conformément aux enseignements de l'invention, illustrés respectivement avant et après le serrage axial du palier par l'arbre ;
- la figure 3 est une vue partielle en perspective avec arrachement illustrant une variante de réalisation de l'invention.

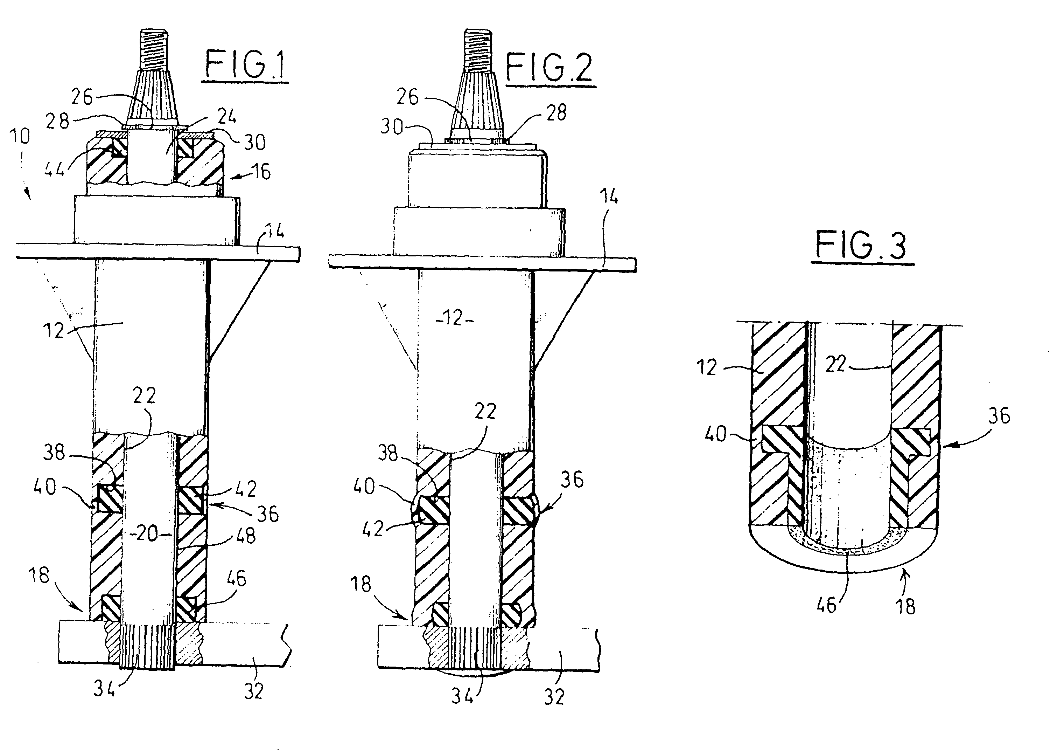

On a représenté sur les figures 1 et 2 un premier mode de réalisation d'un palier 10 selon l'invention qui comporte un corps de palier 12, sensiblement cylindrique et tubulaire, et une collerette radiale externe 14 qui est destinée à la fixation du palier 10 sur un élément de caisse (non représenté) fixe d'un véhicule automobile.

La collerette radiale 14 est généralement implantée près de l'extrémité axiale supérieure 16 du corps de palier 12 de manière que celle-ci affleure à l'extérieur du véhicule au travers d'un orifice (non représenté) aménagé dans l'élément de caisse, tandis que l'extrémité inférieure 18 du corps de palier 12 est agencée à l'intérieur du véhicule, par exemple à l'intérieur du compartiment moteur de la voiture.

Le palier 10 est destiné à assurer le guidage en rotation d'un arbre tournant 20 d'entraînement en balayage alterné d'un essuie-glace (non représenté).

L'arbre tournant 20 est monté dans l'alésage interne 22 du corps de palier 12 et il comporte une extrémité supérieure 24, généralement conique et cannelée, qui dépasse au-dessus de l'extrémité supérieure 16 du palier 10 afin que l'on puisse y monter une tête d'entraînement (non représentée) de l'essuie-glace.

L'extrémité supérieure 24 de l'arbre tournant 20 comporte une gorge radiale 26 destinée à recevoir un anneau élastique 28 qui forme une surface de butée axiale destinée à coopérer avec l'extrémité supérieure 16 du palier 10.

Généralement, une rondelle plate 30 est interposée entre l'anneau élastique 28 et l'extrémité supérieure 16 du corps de palier 12 de manière à éviter que l'anneau élastique 28 ne dégrade le palier 10.

Un élément de tringlerie de transmission de mouvement tel qu'un maneton 32 est serti sur l'extrémité inférieure 34 de l'arbre tournant 20.

L'extrémité inférieure 34 dépasse en-dessous de l'extrémité inférieure 18 du corps de palier 12 et elle est généralement munie de striures ou de cannelures afin d'assurer une transmission fiable du mouvement du maneton 32 à l'arbre tournant 20.

De manière connue, le maneton 32 comporte un orifice de fixation dans lequel l'extrémité inférieure 34 est engagée à force et l'extrémité 34 est déformée, par exemple par sertissage, ce qui provoque le serrage axial du corps de palier 12 et du maneton 32 entre l'anneau élastique 28 de l'extrémité supérieure 24 de l'arbre tournant 20 et l'extrémité inférieure 34 de l'arbre 20.

Conformément aux enseignements de l'invention, le palier 10 comporte un tronçon 36 qui est compressible dans la direction axiale de manière à permettre un serrage sans jeu de l'arbre 20 dans le corps de palier 12.

Dans l'exemple de réalisation qui est représenté sur la figure 1, le palier 10 est réalisé par moulage en matière plastique et le tronçon compressible 36 est en partie formé par une portion amincie du corps de cylindre tubulaire, agencée sensiblement au milieu de celui-ci.

Plus précisément, ledit partie du tronçon compressible 36 se présente sous la forme d'une gorge radiale annulaire 38 formée dans l'alésage interne 22 du corps de palier 12 de manière à ne laisser subsister qu'une chemise cylindrique 40 externe de faible épaisseur.

Cette chemise cylindrique 40 est susceptible de se déformer lorsque le corps de palier 12 est comprimé axialement.

Afin d'éviter tout jeu axial entre le palier 10, l'arbre tournant 20 et le maneton 32, la gorge annulaire 38 est remplie d'une matière élastomère souple de manière à former une bague compressible 42 qui confère au tronçon compressible 36 l'élasticité nécessaire au rattrapage du jeu axial, tout en permettant la compression axiale du palier 10 ainsi que cela est représenté sur la figure 2.

Dans l'exemple de réalisation représenté sur les figures 1 et 2, la matière élastomère souple est choisie de même base polymère que le matériau du corps de palier 12 de sorte que la bague compressible 42 et le corps de palier 12 soient réalisables simultanément par bi-injection.

On peut également prévoir de réaliser la bague compressible 42 par surmoulage, voire même sous la forme d'une pièce indépendante.

De manière connue, des joints d'étanchéité 44, 46 sont agencés à chacune des extrémités supérieure 16 et inférieure 18 du corps de palier 12. Ces joints d'étanchéité 44, 46 sont destinés à coopérer avec la surface cylindrique externe 48 de l'arbre tournant 20 de manière à éviter que de l'eau ou des poussières puisse s'infiltrer entre l'alésage interne 22 du corps de palier 12 et l'arbre tournant 20 au risque de détériorer leur surface de frottement respective.

Dans le mode de réalisation qui est représenté sur les figures 1 et 2, il a été choisi de réaliser les joints d'étanchéité 44, 46 dans le même matériau que la bague annulaire 42 de manière à pouvoir réaliser ceux-ci simultanément, venus de matière avec le corps de palier et avec la bague annulaire 42 par injection simultanée du matériau plastique et de la matière élastomère.

Dans la variante de réalisation qui est représentée sur la figure 3, le tronçon compressible 36 est agencé à l'extrémité inférieure 18 du corps de palier 12 de manière à pouvoir réaliser la bague annulaire 42 et le joint d'étanchéité inférieur 46 en un seul bloc.

La réalisation d'un palier 10 conformément aux enseignements de l'invention permet donc d'assurer un montage sans jeu axial de l'arbre tournant 20 dans le palier 10. Il permet également de mieux maîtriser la valeur de la force du serrage axial qui ne doit pas être trop importante sous peine de gêner le mouvement de rotation de l'arbre tournant 20 dans le palier 10.

Enfin, cette conception permet de réaliser de manière économique l'étanchéité du palier 10.

## Revendications

1. Palier (10) pour la fixation et le guidage en rotation d'un arbre tournant (20), notamment pour un arbre (20) d'entraînement en balayage alterné d'un essuie-glace de véhicule automobile, du type dans lequel une première extrémité axiale (24) de l'arbre (20) est en appui axial contre une première extrémité axiale (16) d'un corps (12) du palier et du type dans lequel la seconde extrémité axiale (34) opposée de l'arbre (20) est serrée axialement en appui contre une seconde extrémité axiale (18) du corps (12) de palier, le palier (10) comportant un tronçon (36) qui est compressible dans la direction axiale de manière à assurer un serrage axial sans jeu de l'arbre (20) dans le corps (12) lors de leur assemblage, **caractérisé en ce que** le corps de palier (12) est réalisé en matière plastique et que le tronçon compressible (36) est formé d'une portion (40) compressible du corps du palier (12) qui est venu de matière avec le corps de palier (12) et d'une portion (42) compressible réalisée en matériau élastomère.

2. Palier selon la revendication 1, **caractérisé en ce que** le tronçon compressible (36) comporte une portion annulaire (42) en matériau élastomère entourée d'une chemise cylindrique (40) en matière plastique réalisée venue de matière avec le corps de palier (12).

3. Palier selon la revendication 2, **caractérisé en ce que** la chemise cylindrique (40) est déformée plastiquement radialement vers l'extérieur lors du serrage axial de l'arbre (20) dans le palier (10) tandis que la portion annulaire (42) est comprimée élastiquement.

4. Palier selon l'une quelconque des revendications 1 à 3, **caractérisé en ce qu'**il est prévu des joints d'étanchéité (44, 46) entre l'arbre (20) et le corps de palier (12) qui sont agencés à chacune des extrémités axiales (16, 18) du corps de palier (12), et **en ce qu'**au moins un joint d'étanchéité (44, 46) est réalisé avec le même matériau et en même temps que la portion en matériau élastomère (42) du tronçon compressible (36).

5. Palier selon la revendication 4, **caractérisé en ce que** la périphérie interne de la portion annulaire (42) en matériau élastomère est au contact de l'arbre (20) lorsque celui-ci est serré axialement dans le palier (10) afin de former un joint d'étanchéité entre l'arbre (20) et le palier (10).

6. Palier selon la revendication 5, **caractérisé en ce que** le tronçon compressible (36) formant joint d'étanchéité est agencé à l'une des extrémités axiales (18) du palier (10).

7. Palier selon l'une quelconque des revendications 1 à 6, **caractérisé en ce que** la portion (42) en matériau élastomère et le corps du palier (12) sont réalisés par moulage par injection simultanée de matière plastique et de matière élastomère.

## Patentansprüche

1. Lager (10) zur Befestigung und Drehführung einer rotierenden Welle (20), insbesondere für eine Antriebswelle (20) für die Pendelwischbewegung eines Kraftfahrzeugscheibenwischers, bei dem sich ein erstes axiales Ende (24) der Welle (20) in axialer Anlage an einem ersten axialen Ende (16) eines Körpers (12) des Lagers befindet und bei dem das gegenüberliegende zweite axiale Ende (34) der Welle (20) axial in Anlage an einem zweiten axialen Ende (18) des Lagerkörpers (12) eingespannt ist, wobei das Lager (10) ein Teilstück (36) umfaßt, das in der axialen Richtung komprimierbar ist, um eine spielfreie axiale Einspannung der Welle (20) im Lagerkörper (12) bei ihrem Zusammenbau zu gewährleisten, **dadurch gekennzeichnet, daß** der Lagerkörper (12) aus Kunststoff ausgeführt ist und daß das komprimierbare Teilstück (38) aus einem komprimierbaren Abschnitt (40) des Lagerkörpers (12), der einstückig mit dem Lagerkörper (12) ausgeführt ist, und aus einem aus Elastomermaterial ausgeführten komprimierbaren Abschnitt (42) besteht.

2. Lager nach Anspruch 1, **dadurch gekennzeichnet, daß** das komprimierbare Teilstück (36) einen ringförmigen Abschnitt (42) aus Elastomermaterial umfaßt, der von einer einstückig mit dem Lagerkörper (12) ausgeführten zylindrischen Umhüllung (40) aus Kunststoff umgeben ist.

3. Lager nach Anspruch 2, **dadurch gekennzeichnet, daß** die zylindrische Umhüllung (40) bei der axialen Einspannung der Welle (20) im Lager (10) radial plastisch nach außen verformbar ist, während der ringförmige Abschnitt (42) elastisch verformbar ist.

4. Lager nach einem der Ansprüche 1 bis 3, **dadurch gekennzeichnet, daß** Dichtungen (44, 46) zwischen der Welle (20) und dem Lagerkörper (12) vorgesehen sind, die an jedem der axialen Enden (16, 18) des Lagerkörpers (12) angeordnet sind, und daß wenigstens eine Dichtung (44, 46) mit dem gleichen Werkstoff und gleichzeitig mit dem Abschnitt aus Elastomermaterial (42) des komprimierbaren Teilstücks (36) ausgeführt ist.

5. Lager nach Anspruch 4, **dadurch gekennzeichnet, daß** sich der innere Umfang des ringförmigen Abschnitts (42) aus Elastomermaterial in Kontakt mit der Welle (20) befindet, wenn diese axial im Lager (10) eingespannt ist, um eine Dichtung zwischen der Welle (20) und dem Lager (10) zu bilden.

6. Lager nach Anspruch 5, **dadurch gekennzeichnet, daß** das als Dichtung dienende komprimierbare Teilstück (36) an einem der axialen Enden (18) des Lagers (10) angeordnet ist.

7. Lager nach einem der Ansprüche 1 bis 6, **dadurch gekennzeichnet, daß** der Abschnitt (42) aus Elastomermaterial und der Lagerkörper (12) durch Spritzgießen durch gleichzeitiges Einspritzen von Kunststoff und von Elastomermaterial ausgeführt sind.

## Claims

1. A bearing (10) for fastening and guiding a rotatable spindle (20) in its rotation, in particular for a spindle (20) for driving a motor vehicle screen wiper in to-and-fro wiping motion, of the type in which the first axial end (24) of the spindle (20) is in axial abutment against a first axial end (16) of a body (12) of the bearing, and of the type in which the second or opposite axial end (34) of the spindle (20) is held in axial abutment against a second axial end (18) of the bearing body (12), the bearing (10) including a part (36) which is compressible in the axial direction in such a way as to ensure that the spindle (20) is held axially, without any clearance, in the body (12) while they are being assembled, **characterised in that** the bearing body (12) is made of plastics material, and **in that** the compressible part (36) consists of a compressible portion (40) of the body of the bearing (12), which is an integral part of the bearing body (12), together with a compressible element (42) made of an elastomeric material.

2. A bearing according to Claim 1, **characterised in that** the compressible part (36) consists of an annular element (42) of elastomeric material surrounded by a cylindrical jacket portion (40) of plastics material which is formed integrally with the bearing body (12).

3. A bearing according to Claim 2, **characterised in that** the cylindrical jacket portion (40) undergoes plastic deformation in a radially outward direction when the spindle (20) is being held axially in the bearing (10), while the annular element (42) is in elastic compression.

4. A bearing according to any one of Claims 1 to 3, **characterised in that** seals (44, 46) are provided between the spindle (20) and the bearing body (12), and are disposed at respective axial ends (16, 18) of the bearing body (12), and **in that** at least one seal (44, 46) is made from the same material and at the same time as the element (42) of elastomeric material of the compressible part (36).

5. A bearing according to Claim 4, **characterised in that** the inner periphery of the annular portion (42) of elastomeric material is in contact with the spindle (20) when the latter is held axially in the bearing (10), whereby to constitute a seal between the spindle (20) and bearing (10).

6. A bearing according to Claim 5, **characterised in that** the compressible part (36) which constitutes a seal is arranged at one of the axial ends (18) of the bearing (10).

7. A bearing according to any one of Claims 1 to 6, **characterised in that** the element (42) of elastomeric material and the body (12) of the bearing are made in a moulding operation by simultaneous injection of plastics material and elastomeric material.
